# EUROPEAN PATENT APPLICATION

(11) **EP 1 900 656 A1**
(43) Date of publication of application: **19.03.2008**
(21) Application number: 06757342.8
(22) Date of filing: 15.06.2006
(51) Int. Cl.: B65G 23/14, B65G 15/02, B65G 23/18

(54) **CURVED BELT CONVEYOR**

(30) Priority: 16.06.2005 JP 2005176377; 16.09.2005 JP 2005269509; 31.05.2006 JP 2006151432
(71) Applicant: Maruyasu Kikai Co. Ltd., Okaya-shi, Nagano 3948540 (JP)
(72) Inventor: OSAKA, Hajime, c/o Marayasu Kikai Co. Ltd., Okaya-shi, Nagano 3948540 (JP); MIYASAKA, Tetsuo, c/o Marayasu Kikai Co. Ltd., Okaya-shi, Nagano 3948540 (JP)
(74) Representative: Kedinger, Jean-Paul
(86) International application number: PCT/JP2006/311994
(87) International publication number: WO 2006/134988

(57) **Abstract**

A curved belt conveyor, comprising a drive mechanism capable of stably rotatingly driving an endless curved belt even if oil, water, or powder is adhered to the surface of the belt. A rotating member vertically holding and endlessly rotating the belt is disposed on one or both of the forward and return passage sides of the endless curved belt formed in a circular are shape in plan view on a line near its outer peripheral edge part and crossing perpendicularly to a centerline redially extending from the rotating centre of the curved belt. The endless curved belt is rotated in the peripheral direction by the movement of the held position of the curved belt by the endless rotation of the rotating member.

## Description

### Technical Field

This invention relates to a curved belt conveyor, and more particularly a drive mechanism for rotatingly driving an endless curved belt.

### Background Art

As a system for driving an endless curved belt in a curved belt conveyor, there has been employed a system in which either one or both outer peripheral edges of a forward passage side (an upper side) or a return passage side (a lower side) of a curved belt wound around frames with an approximate arcuate shape as seen from a top plan view are held from above and below by rollers (driving rollers and pinch rollers), the rollers are driven and rotated to cause the curved belt to be driven (refer to Patent Document 1, for example).

The curved belt conveyor described in the aforesaid Patent Document 1 has an advantage that the endless curved belt can be manufactured easily under a less-expensive manner because it has no hooking beams or beads at the endless curved belt as found in the prior art and another advantage that the belt can be easily fixed or removed because it has no protrusions such as hooking beams or beads and the like.
However, to the contrary, this prior art system has some problems that when oil, water, or powder is adhered to the surface of the endless curved belt, a frictional force for holding the endless curved belt is reduced during adhesion of the oil, water or the like to the upper and lower rollers holding the belt and a rotation transmitting force of the endless curved belt is also reduced and the belt rotational running becomes unstable because the driving rollers and the pinch rollers are line contacted with the belt.

Patent Document 1: Japanese Unexamined Patent Application Publication No. 11-59837

### Disclosure of the Invention

### Problem to be Solved by the Invention

This invention has been invented in reference to the aforesaid problems found in the prior art and it is an object of this invention to provide a curved belt conveyor having a driving mechanism capable of stably rotatingly driving the belt even if oil, water, or powder is adhered to the surface of the endless curved belt.
Further, it is another object of this invention to provide a curved belt conveyor having a driving mechanism capable of positively restricting a displacement of the endless curved belt toward a turning center of the endless curved belt.
In addition, it is a still further object of this invention to provide a curved belt conveyor having a driving mechanism capable of easily accommodating for a variation of belt width of the endless curved belt for its narrow or wide width.

### Means for Solving the Problem

In order to accomplish the aforesaid objects, the curved belt conveyor of this invention is constructed in that the outer peripheral edges of one or both of forward passage and return passage sides of the endless curved belt are held with rotating members rotated in an endless manner while being correspondingly arranged with the endless curved belt being held between them, and the endless curved belt is turned in a peripheral direction through movement of the held position under an endless rotation of the rotating members (Claim 1). That is, the curved belt conveyor of this invention is constructed such that the outer peripheral edges of the endless curved belt are vertically held by the rotating members rotated in an endless manner, the holding positions are moved through a rotation of the rotating members to cause the curved belt to be turned in a peripheral direction.
As a form of the aforesaid holding operation, there may be applied a form utilizing attracting action with magnets (Claim 2) and a form utilizing pressing action with a resilient member such as a spring and the like (Claim 17).

In accordance with the aforesaid means, the outer peripheral edges of the endless curved belt are vertically held by the rotating members turned in an endless manner and the held positions move from the starting end to the terminal end of the rotating members turned in an endless manner to cause the endless curved belts to be moved together in a peripheral direction. This operation is carried out continuously by the rotating members turned in an endless manner to cause the endless curved belt to be rotatingly driven.

The rotating members are constituted by endless rotating belts arranged at inner positions in a diametrical direction from the outer peripheral edges of the endless curved belt, and magnets or metallic plates attracting the magnets fixed to the outer surfaces (surfaces where the rotating members oppositely face to each other) of the rotating belts spaced apart by a predetermined gap, the curved belt is held under attraction of the magnets of the corresponding rotating members while holding the curved belt or attraction among the magnets and the metallic plates, and then transferred (Claim 2). In the case that the magnets are attracted to each other, one of N-pole and S-pole is fixed to the rotating belt of one rotating member, and the magnets of the rotating members and the magnets of opposite pole generating attracting action are fixed to the rotating belt of the rotating member that is arranged in correspondence with the rotating member.
As the aforesaid rotating member, it is constituted such that a member having scarce extension or shrinkage and a less resilient deformation, a chain, for example, is used and flat plate-like magnets or metallic plates are fixed to the chain through fixing pieces (Claim 3). Further, it is also possible to apply a timing belt (a toothed belt) and a steel belt and the like to the rotating belt in addition to the aforesaid chain.

In accordance with the aforesaid means, the endless curved belt is held under attracting action of the magnets fixed to the outer surface of the rotating belt rotated in an endless manner or attracting action between the magnet and the metallic plate, and the magnets holding the curved belt or the magnet and the metallic plate are moved from the starting end to the terminal end of the rotating belt under an endless rotation of the rotating belt. With this operation, movement while holding the endless curved belt is carried out continuously through the endless rotation of the rotating belt.

Then, the rotating members constituted as described above are arranged between the forward passage side and the return passage side of the endless curved belt and outside one or both of the forward passage side and return passage side such that a centerline of each of these rotating members is arranged on the same line as seen in a top plan view (Claim 4).
Or, the rotating members arranged outside the forward passage side and the return passage side may be alternatively arranged such that their centerline is set to cause the extremity end in the rotating direction to face toward the outside with respect to the centerline of a central rotating member arranged between the forward passage side and the return passage side (Claim 5). In the case that the movement of the held endless curved belt is carried out on both forward passage side and return passage side, the rotating members arranged between the forward passage side and the return passage side of the endless curved belt may be set such that one rotating member is arranged at a central part between the upper rotating member and the lower rotating member so as to be applied for both the forward passage and return passage. It is of course possible that the rotating member arranged at the center is separately arranged for the forward passage and the return passage.

In accordance with the aforesaid means, the rotating members for holding the outer peripheral edges of the endless curved belt at the forward passage side and the return passage side have their centerlines arranged on the same line as viewed in a top plan view, thereby the opposing rotating members have the magnets oppositely faced to each other and the magnet and the metallic plate oppositely faced to each other from the starting end to the terminal end to enable the curved belt to be positively held and moved. Then, driving of the rotating members enables a rotating force for driving the central arranged rotating member to be easily transmitted to the upper and lower arranged rotating members through power transmitting means such as a gear and a belt and the like, so that it can be easily constituted as a full driving type in which each of the rotating members is driven and rotated.
In addition, in the case that the upper and lower rotating members are alternatively arranged to each other with respect to the central rotating member, the endless curved belt can be held and moved while its outer peripheral edge is being biased toward the outside in a diametrical direction.

Further, although the rotating members arranged outside either the forward passage side or the return passage side of the aforesaid endless curved belt may be fixed at predetermined positions with respect to the frames such that their held state can be maintained with one corresponding rotating member, they can be constituted such that they can be changed over in regard to one corresponding rotating member (Claims 6, 7, 8). As a method for changing over engagement or disengagement, a process for turning a member having the rotating members with one side part being applied as a center or a process for performing a linear movement along a vertical direction or any other processes can be applied.

In accordance with the aforesaid means, movement of the outside rotating member for holding the forward passage side or return passage side of the endless curved belt enables a gap in regard to the other holding rotating member to be variable in wide or narrow state. Accordingly, the aforesaid rotating members are moved to cause a gap between the rotating members to be opened and thereby their held state can be released and engagement or disengagement and changing-over of the endless curved belt can be easily carried out.

In addition, the aforesaid rotating members are arranged on a line crossing at a right angle with a centerline extending from the center of turning of the endless curved belt toward its diametrical direction, one rotating member of a pair of upper and lower rotating members is arranged while a central part of a machine length of the rotating member is in compliance with a crossing point of the line crossing at a right angle with the aforesaid centerline, the other rotating member is arranged with an upstream side in belt advancing direction being positioned on the central part in a machine length of the aforesaid one rotating member or positioned at a downstream side in a belt advancing direction from the central part and the aforesaid endless curved belt may be moved in a peripheral direction through movement of the holding position by the endless rotation of the rotating member (Claim 9).
As the aforesaid holding form, there may be applied a form for utilizing attracting action of the magnets (Claim 10) and a form for utilizing pressing and contacting action through a resilient member such as a spring and the like (Claim 17).
In addition, as the pair of upper and lower rotating members for holding the endless curved belt, any type of rotating members is applicable, such as both of them being of a driving type or a combination of a driving type and a driven type.

In accordance with the aforesaid means, the outer peripheral edge of the endless curved belt is held from above and below with the rotating members rotated in an endless manner, the held position is moved from the upstream side to the downstream side in a belt advancing direction of the rotating members rotated in an endless manner to cause the endless curved belt to be moved together in a peripheral direction. This operation is carried out continuously by the rotating members rotated in an endless manner and thereby the endless curved belt is rotatingly driven.
Then, the pair of upper and lower rotating members for holding the curved belt are arranged on a line crossing at a right angle with a centerline extending from a turning center of the endless curved belt toward a diametrical direction, one of a pair of upper and lower rotating members is arranged with the central part in a machine length of the rotating member being aligned with a crossing point of a line crossing at a right angle with the aforesaid centerline, and the other rotating member is arranged with the upstream side in a belt advancing direction being positioned on the central part in a machine length of the aforesaid one rotating member or at a downstream side in a belt advancing direction of the central part, so that the endless curved belt is rotatingly driven while being biased toward outside in a diametrical direction. In addition, the longer a holding range of a pair of upper and lower rotating members is, the more their driving force is.

The aforesaid rotating members are constituted by a rotating belt rotated in an endless manner that is arranged at an inner position in a diametrical direction than the outer peripheral edge of the endless curved belt, and the magnets or the metallic plates to attract the magnets placed by a predetermined gap against the outer peripheral surface of the aforesaid rotating belt (a surface where the rotating members are oppositely faced to each other) that are fixed, the curved belt is held through attraction of the magnets of the corresponding rotating members while holding the curved belt or attraction of the magnets and the metallic plate and transferred (Claim 10). In the case that the magnets are attracted to each other, one of N-pole or S-pole of the magnet is fixed to the rotating belt of one rotating member and opposite polarity magnets for generating attracting action together with the magnets of the aforesaid rotating members are fixed to the rotating belt of the rotating member arranged in correspondence with the rotating member.
As the aforesaid rotating belt, a member having scarce extension or shrinkage and less amount of resilient deformation, a toothed belt (a timing belt) of rubber or resin is used, for example, and magnets or metallic plates are fixed to the belt through fixing members to constitute the rotating members (Claim 11).
As a practical configuration of the aforesaid fixing members, for example, it is constituted by resin blocks having magnets or metallic plates embedded therein and fixing pins arranged over front and rear protrusion edges of the resin block, the resin blocks having the magnets or metallic plates embedded therein are covered over the outer peripheral surface of the aforesaid toothed belt, and the fixing pins are struck over the front and rear protrusion edges of the resin blocks protruded from both sides of the toothed belt in its width direction toward inside so as to cause the blocks to be integrally installed at the toothed belt (Claim 12). Further, as the rotating belt, a chain and a steel belt or the like can be used in addition to the aforesaid toothed belt (a timing belt).

In accordance with the aforesaid means, the endless curved belt is held under attracting action of the magnets to each other fixed to the outer surface of the rotating belt rotated in an endless manner or attracting action among the magnets and metallic plates, and the magnets holding the curved belt or the magnets and metallic plates are moved from the starting end toward the terminal end of the aforesaid rotating belt through an endless rotation of the rotating belt. With this arrangement, its movement with the endless curved belt held is carried out continuously through the endless rotation of the rotating belt. Then, since the resin blocks having the magnets or metallic plates embedded therein are installed at the toothed belt with fixing pins, it becomes possible to replace the resin blocks (magnets or metallic plates) and a partial replacement of damaged member can be carried out.

Then, the rotating members constituted as described above have one driving type rotating member between the forward passage side and the return passage side of the endless curved belt, driven type rotating members are arranged at both outsides of the forward passage side and the return passage side (the forward passage side is an upper side and the rear passage side is a lower side) in correspondence with one driving rotating member and at the same time the driven type rotating members at the forward passage side and the return passage side are arranged from the central part in a machine length of the aforesaid driving type rotating member to the downstream side in a belt advancing direction (Claim 13). Further, in this case, a length of the driving type rotating member (a distance between axes of the toothed pulley) arranged between the forward passage side and the return passage side shall be set to a length of approximate double of the length of the driven type rotating member (a distance between the toothed pulley axes).
Then, although a pair of (a set of) rotating members composed of the aforesaid driving type rotating member and driven type rotating member are arranged while being crossed at a right angle with respect to a centerline extending from the turning center of the endless curved belt to a diametrical direction, the number of rows of members to be arranged is not restricted to one, and a plurality of rows may be applied (Claim 18). In addition, in the case that they are arranged in a plurality of rows, any type of arrangements can be applied, for example, each of the rows can be closely arranged without any clearance or arranged while a predetermined clearance being applied between the rows.

In accordance with the aforesaid means, in the case that each of both forward passage side and return passage side of the endless curved belt is held by a pair of upper and lower rotating members to perform a driving operation, the rotating members arranged between the forward passage side and the return passage side can be used together as one of the rotating member at the forward passage side and the rotating member at the return passage side.
In addition, a length of each of the pair of upper and lower (a set of) rotating members in their advancing direction is set such that if the belt width of the endless curved belt is increased (widened), a driving force for holding and transferring the belt is also required to be increased in correspondence with the increased width, resulting in an increase of a length of the rotating member at the middle stage arranged between the forward passage side (upper side) and the return passage side (lower side). However, in such a case as above, the length is not only merely increased, but also it is natural that an entire length of a pair of rotating members is required to hold the endless curved belt, making it necessary to move the position where the rotating members are arranged from the outer peripheral edge of the aforesaid curved belt toward the rotating center on the centerline extending from the turning center of the endless curved belt to the diametrical direction. However, if short rotating members (the rotating member at the middle stage) for generating a driving force of an approximate equal number (1/2, 1/3 and the like, for example) generated by the rotating members in one long row are arranged in parallel in equal number (2 rows, 3 rows and the like, for example), the driving force generated by these members becomes approximately equal to that of the aforesaid rotating member in one row. Then, since the rotating member is short in its length, its arrangement position can be moved toward the outer peripheral direction of the endless curved belt, allowing assuring the effective width applied to the transferring of the endless curved belt.

Further, although the rotating member arranged outside the forward passage side or the return passage side of the aforesaid endless curved belt is fixed at a predetermined position with respect to the frames such that the held state can be maintained with the corresponding another rotating member, it may be constituted such that it can be freely changed over for engagement or disengagement with respect to corresponding one rotating member (Claims 14, 15). As a method for changing over the engagement and disengagement, a process for rotating the member fixed with rotating members around the center of one side part or a process for moving it in a linear manner toward the vertical direction and the like may be applied.

In accordance with the aforesaid means, movement of the outer rotating member for holding the forward passage side or the return passage side of the endless curved belt enables a gap with respect to another rotating member for holding it to be varied wide or narrow. Accordingly, the aforesaid rotating members are moved to open a gap between the rotating members to enable the held state to be released and thus engagement or disengagement of the endless curved belt can be easily exchanged to each other.

In addition, the driven type rotating members arranged outside the forward passage side and return passage side of the endless curved belt cause the entire rotating members to be reversely turned around the toothed pulley axis of the upstream side in a belt advancing direction by 180° and a rotating direction of the driving type rotating member may also be changed over freely between a normal state and a reverse state (Claim 16).

In accordance with the aforesaid means, the driven type rotating members arranged outside (upper side) of the forward passage side and outside the return passage side (lower side) of the endless curved belt are reversed by 180° around the toothed pulley axis of the upstream side in a belt advancing direction and a rotating direction of the driving type rotating member arranged between the forward passage side and the return passage side is changed over to a reversing direction to enable the rotating direction of the endless curved belt to be changed over to an opposite direction and at the same time also during the rotation of its opposite direction, positions of the pair of upper and lower rotating members for holding the endless curved belt are located on a line crossing at a right angle with the centerline extending from the turning center of the aforesaid endless curved belt toward a diametrical direction in the same manner as that of the normal rotation, and further the positional relation of a pair of upper and lower rotating members for holding the belt is also the same, so that the endless curved belt can be turned while the belt being biased outside in a diametrical direction.

In addition, the aforesaid rotating members may be constituted by a rotating belt turned in an endless manner that is arranged at the inner side position in a diametrical direction from the outer peripheral edge of the endless curved belt and a resilient member fixed at the outer surface of the aforesaid rotating belt in a predetermined clearance, and the curved belt is held under press contact of the resilient members of the corresponding rotating members while holding the curved belt and transferred (Claim 17).

### Effects of the Invention

Since the curved belt of this invention is moved under the constitution described in Claims 1, 9 while the outer peripheral edge of one of the forward passage side or return passage side or both outer peripheral edges of the forward passage side and the return passage side of the endless curved belt are being held by the rotating members rotated in an endless manner and moved, the holding positions (area) are many as compared with that of the prior art structure held and rotated by the rollers and its line contact is changed into a surface contact, so that even if oil, water, or powder is adhered to the surface of the endless curved belt, it is possible to perform a stable rotational driving of the belt.
In addition, since a starting end of one of a pair of upper and lower rotating members for holding the endless curved belt is positioned on the centerline of the other rotating member or at the downstream side than that position, the endless curved belt can be biased outside in a diametrical direction and rotated. Accordingly, the holding structure attained by the rotating members and an arrangement of the rotating members enables the endless curved belt to be prevented from being moved toward the turning center.

Then the rotating members for holding the endless curved belt are constituted as that described in Claims 2, 3, 10 and 11, the curved belt is held by the attracting force of magnets, so that it is not necessary to make any special means to the endless curved belt and the belt having no beams can be used as it is. In addition, because the belt is held with attracting force of the magnets, the endless curved belt is scarcely damaged and a life of the belt can be kept for a long period of time. Further, when the constitution of Claim 12 is applied, a usual timing belt can be used to enable the rotating members having magnets to be easily constituted and at the same time when the magnets are damaged, they can be accommodated by replacing the damaged resin blocks (magnets or metallic plates), so that it is possible to provide the rotating member showing a superior repairing and economic characteristic.

In addition, when the constitution described in Claims 4, 5, 13 is applied, the rotating members arranged inside the curved belts of a pair of upper and lower rotating members for holding the endless curved belt arranged inside the curved belts can be used in common at the forward passage side and the return passage side and a simplification of the device and its cost reduction can be attained.
In addition, in the case that the constitutions described in Claims 6, 7, 8, 14 and 15 are applied, movement of the rotating members enables the held state to be released because one (outside one) of the rotating members holding the endless curved belt contacts or is released from the belt, and the engagement or disengagement of the endless curved belt can be easily carried out. Thus, replacement or cleaning and the like of the endless curved belt can be conveniently carried out.

In addition, when the constitution described in Claim 16 is applied, the driven rotating members arranged outside the forward passage side and the return passage side of the endless curved belt are reversely turned around the toothed pulley axis of the upstream side in a belt advancing direction by 180° and the rotating direction of the driving rotating member is changed over to its opposite direction, thereby it can be driven and rotated not only in a normal rotating direction but also in a reverse rotating direction. Then, also at the time of its reverse rotation, the belt can be biased toward outside in a diametrical direction and rotated in the same manner as the time of normal rotation.
Further, when the constitution described in Claim 17 is applied, the outer peripheral edge of the endless curved belt is pressed mechanically, held and transferred with the resilient member, so that a stable belt rotation can be assured.
In addition, when the constitution described in Claim 18 is applied, an expansion of the belt width of the endless curved belt (an opening angle is the same) can be accommodated by arranging a plurality of rows of short rotating members in parallel to each other without increasing a length of the driving type rotating member (the rotating member at the middle stage arranged between the forward passage side (upper side) and the return passage side (lower side)) in a pair of rotating members for holding and transferring belt. Accordingly, it is not necessary to prepare any rotating member of different length in correspondence with a size of the belt width of the curved belt conveyor and the components can be used in common in the same rotating member by arranging one row or two rows in response to the belt width size. Further, since a plurality of rows of short rotating members are arranged, they can be arranged in an outer peripheral direction of the endless curved belt as compared with that of arrangement of one row of the long rotating member, thereby a large transferring effective width can be assured.

### Best Mode for Carrying Out the Invention

Referring now to the drawings, some preferred embodiments of the curved belt conveyor of this invention will be described as follows.

### [Preferred Embodiment 1]

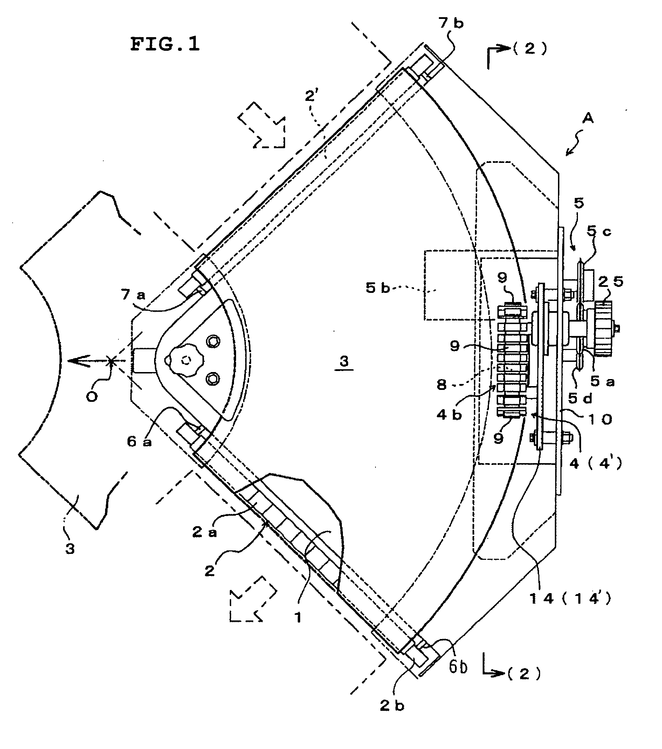

Fig. 1 shows a curved belt conveyor A provided with a new rotating mechanism of this invention, wherein the curved belt conveyor A is constituted such that tail rollers 2, 2 of returning members are rotationally arranged at both sides in a peripheral direction of a flat plate-like frame 1 having an approximate fan-shape as seen in a top plan view with an opening angle of 90° as seen in a top plan view, an endless curved belt 3 is wound over both tail rollers 2, 2' to constitute a transferring passage of approximate arcuate shape as seen in a top plan view. Then, rotating mechanisms 4, 4' comprised of a pair of upper and lower rotating members 4a, 4b and 4a, 4c for vertically holding the outer peripheral edges of the endless curved belt 3 at the forward passage side and the return passage side are arranged at the middle position in a peripheral direction in the frame 1, and a driving mechanism 5 for driving and rotating the rotating members 4a, 4b, 4c constituting the rotating mechanisms 4, 4' is mounted along the outer peripheral edge of the frame 1.

The tail rollers 2, 2' of the returning member arranged at both sides of the frame 1 in a peripheral direction are constituted such that many small rollers 2a formed into a short cylindrical shape are rotatably arranged outside a tail roller shaft 2b in correspondence with a belt width of the endless curved belt 3, thereby they are formed as a long shaft-like roller of the same diameter over the shaft length.
Then, the tail roller shaft 2b rotatably supporting the small roller 2a is arranged and supported in a horizontal orientation between bearings 6a, 6b and 7a, 7b of the frame 1 arranged at the inner peripheral part and the outer peripheral part at each of both sides of the frame, and shaft centers of both tail roller shafts 2b are arranged in an opening angle of 90° as seen in a top plan view. A turning center O of the endless curved belt 3 is set to be positioned at a position where the outer diameter extension lines of both tail roller shafts 2b cross each other.

Small rollers 2a installed in parallel along the tail roller shafts 2b are constituted such that each of the small rollers is independently rotated. That is, although a peripheral speed at an inner periphery and a peripheral speed at an outer periphery of the endless curved belt 3 of the curved belt conveyor are different from each other, the tail rollers 2, 2' supporting both ends of the endless curved belt 3 as described above are constituted while many small rollers 2a are arranged in parallel on the tail roller shafts 2b, thereby each of the small rollers 2a is rotated in a peripheral speed at each of the positions. In addition, since the small rollers 2a are constituted by rollers of sufficient small outer diameter, it is possible to restrict a step (a clearance) generated at connected portions with other conveyors connected to a starting end in transferring direction and a terminal end in transferring direction of the curved belt conveyor A.

The endless curved belt 3 wound between the tail rollers 2, 2' is constituted as a donut-shaped sheet having an approximate frustum-of-cone shape, this is folded into a flat shape to make a fan-shape as seen in a top plan view, its large outer diameter part becoming an outer peripheral part is installed from the center side of the frame 1. With this arrangement as above, an arcuate transferring passage of approximate fan-shape as seen in its top plan view is constituted. Further, it is preferable to use a belt as the endless curved belt 3 in which strong wire members (core material) are internally arranged in a radial manner toward the belt width direction within the thick wall part and compression strengths in the belt width direction and the rotating direction are equally increased.
Then, an approximate entire surface at the forward passage side 3a of the endless curved belt 3 wound between the tail rollers 2, 2' is constituted to be supported from lower side by the flat plate-like frame 1 supporting the tail rollers 2, 2'. Further, both end edges in a peripheral direction of the frame 1 extend close to the tail rollers 2, 2'.

The rotating mechanisms 4, 4' for driving and rotating the endless curved belt 3 are constituted by a rotating member 4a rotated in an endless manner arranged between and near the outer peripheral edges of a forward passage side 3a and a return passage side 3b of the endless curved belt 3 and rotating members 4b, 4c endlessly rotated that are arranged outside (upper side) of the belt on the forward passage side 3a and outside (lower side) of the belt on the return passage side 3b in correspondence with the rotating member 4a. Then, the rotating mechanism 4 for driving the forward passage side belt 3a of the endless curved belt is constituted by the rotating member 4a and the rotating member 4b arranged above and below the return passage side belt 3a, and the turning mechanism 4' for driving the return passage side belt 3b of the endless curved belt is constituted by the rotating member 4a and the rotating member 4c arranged above and below the return passage side belt 3b.

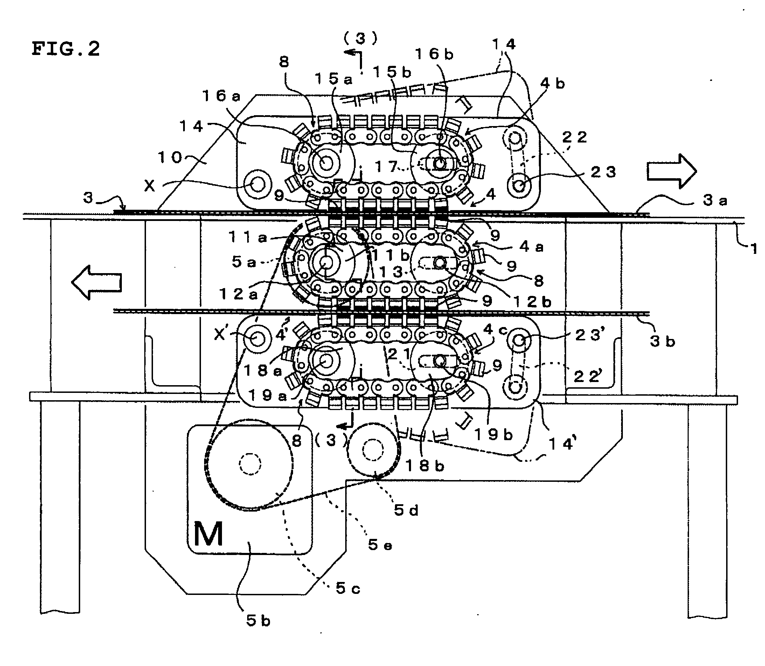

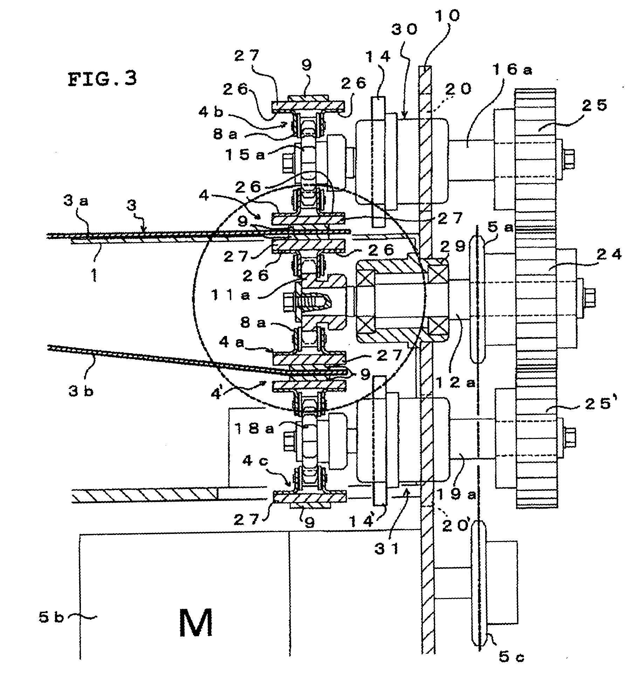

The turning members 4a, 4b and 4c constituting the rotating mechanisms 4, 4' will be described as follows. Since the rotating members 4a, 4b and 4c have the same structure, the rotating member 4a will be described as follows.
The rotating member 4a is constituted by an endless rotating chain (a rotating belt) 8 and magnets 9 fixed to the outer surface of the chain 8 in a predetermined gap.
As shown in Figs. 2 and 3, the magnets 9 for the chain 8 are fixed to link plates 8a constituting the chain 8 so as not to prohibit an endless rotation of the chain 8. Their practical fixing structure will be described later.
In addition, since the belt is held under attracting action of N-pole and S-pole of the magnets 9, a polarity of the magnets 9 installed at the rotating members 4b, 4c arranged above and below the belt shall be an s-pole when the polarity of the magnets 9 installed at the rotating member 4a set at the middle stage is an N-pole.

The rotating member 4a is wound around a fixing plate 10 fixed in a vertical orientation along the outer peripheral edge of the frame 1 at its peripheral middle position over sprockets 11a, 11b rotatably pivoted in a predetermined gap in a peripheral direction. Then, the shaft 12a having one sprocket 11a fixed is protruded out of the fixing plate 10 through a bearing 29 attached to the fixing plate 10, and a driving mechanism 5 is connected to the protruded portion. In addition, the shaft 12b having the other sprocket 11b fixed thereto is fitted to a long hole 13 opened at the fixing plate 10 such that an inter-shaft distance with the shaft 12a can be adjusted. With this arrangement, the shaft 12b is moved and adjusted along the long hole 13 to enable a tension state of the chain 8 to be adjusted.

The rotating member 4b is wound around sprockets 15a, 15b rotatably pivoted in a predetermined gap in a peripheral direction at an auxiliary fixing plate 14 fixed inside the fixing plate 10. Then, the shaft 16a having one sprocket 15a fixed thereto is protruded out of the auxiliary fixing plate 14 through a bearing 30 fixed to the auxiliary fixing plate 14, and the driving mechanism 5 is connected to the protruded part.
In addition, the shaft 16b having the other sprocket 15b fixed thereto is fitted into the long hole 17 opened at the auxiliary fixing plate 14 such that an inter-shaft distance in regard to the shaft 16a can be adjusted. With this arrangement, the shaft 16b is moved and adjusted along the long hole 17 to enable a tension state of the chain 8 to be adjusted.

The rotating member 4c is wound around the sprockets 18a, 18b rotatably pivoted in a predetermined gap at an auxiliary fixing plate 14' fixed inside the fixing plate 10. Then, the shaft 19a having one sprocket 18a fixed thereto is protruded out of the auxiliary fixing plate 14' through a bearing 31 fixed to the auxiliary fixing plate 14' and the driving mechanism 5 is connected to the protruded part.
In addition, the shaft 19b having the other sprocket 18b fixed thereto is fitted into a long hole 21 opened at the auxiliary fixing plate 14' such that an inter-shaft distance in regard to the shaft 19a can be adjusted. With this arrangement, the shaft 19b is moved and adjusted along the long hole 21 to enable a tension state of the chain 8 to be adjusted.

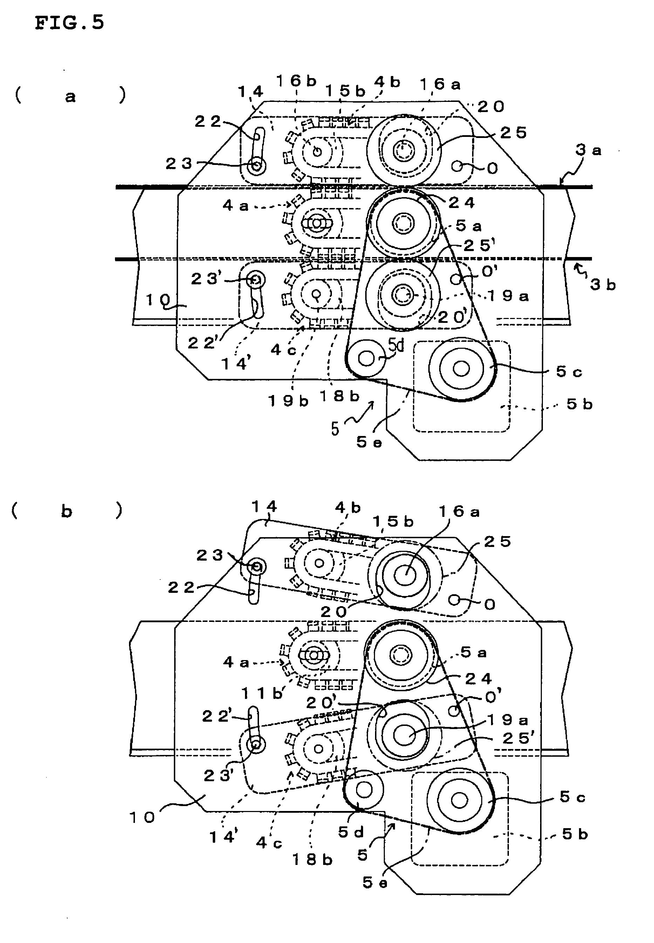

Then, the auxiliary fixing plate 14 having the rotating member 4b fixed thereto and the auxiliary fixing plate 14' having the rotating member 4c fixed thereto are supported against the fixing plate 10 provided with the rotating member 4a such that they can be oscillated vertically.
More practically, as shown in Fig. 2, the auxiliary fixing plate 14 having the rotating member 4b fixed thereto and the auxiliary fixing plate 14' having the rotating member 4c fixed thereto are supported such that they can be oscillated vertically around the shaft supporting portions X, X' at the sprockets 15a, 18a to which the driving mechanism 5 is attached. The opposite sides of the shaft supporting portions X, X' are provided with stopper pins 23, 23' fitted to the arcuate grooves 22, 22' restricting a range of vertical oscillation that are opened and arranged at the fixing plate 10. In addition, bearings 30, 31 fixed to the auxiliary fixing plates 14, 14' oscillated vertically are fitted to the fixing plate 10 and ellipse-shaped window holes 20, 20' enabling vertical movement are opened there.
With the aforesaid configuration, the rotating members 4a, 4b and 4c keep their parallel states as shown in Fig. 5 (a) under a state in which the auxiliary fixing plates 14, 14' are supported in their horizontal state, the forward passage side 3a is held by the rotating member 4b and the rotating member 4a, and the return passage side 3b is held by the rotating member 4a and the rotating member 4c so as to rotate the endless curved belt 3 in a peripheral direction. Then, when the auxiliary fixing plate 14 is rotated upward and the auxiliary fixing plate 14' is rotated downward, as shown in Fig. 5(b), the rotating member 4b and the rotating member 4c are moved away from the rotating member 4a positioned at the middle part and the held state kept up to now is released. With this arrangement, it becomes possible to perform engagement or disengagement of the endless curved belt 3 in an easy manner.

The driving mechanism 5 operates to drive and rotate the aforesaid rotating members 4a, 4b and 4c, and as shown in Figs. 2 and 3, a driving sprocket 5a is fixed to the shaft 12a having a sprocket 11a supporting the rotating member 4a arranged at the middle part in a vertical direction, a chain 5e is wound around the driving sprocket 5a, a sprocket 5c fixed to an output shaft of a motor 5b suspended down and fixed to the frame 1 and an idler sprocket 5d, and the rotating member 4a is driven and rotated with a rotating force of the motor 5b.

A power transmitting gear 24 is fixed to the side part of the shaft 12a having the driving sprocket 5a for driving and rotating the rotating member 4a fixed thereto, a driven gear 25 engaged with the power transmitting gear 24 is fixed to the shaft 16a having one sprocket 15a fixed thereto to wind around the rotating member 4b to support it, and similarly a driven gear 25' is fixed to a shaft 19a having one sprocket 18a fixed thereto to wind around the rotating member 4c to support it. With this arrangement, the rotating force for rotatingly driving the rotating member 4a is transmitted to one of the sprockets for supporting the rotating members 4b, 4c arranged above and below it through the gear transmitting mechanism to enable all the rotating members 4a, 4b and 4c to be rotatingly driven. Further, setting the number of teeth of the power transmitting gear 24 and the driven gears 25, 25' same enables the rotating members 4a, 4b and 4c to be rotated in a synchronous manner. Further, the rotating members 4a, 4b and 4c are cooperatively rotated through attracting action of the magnets under a driving rotation of the rotating member 4a even if the driving force transmitting gear 24 and the driven gears 25, 25' are not present.

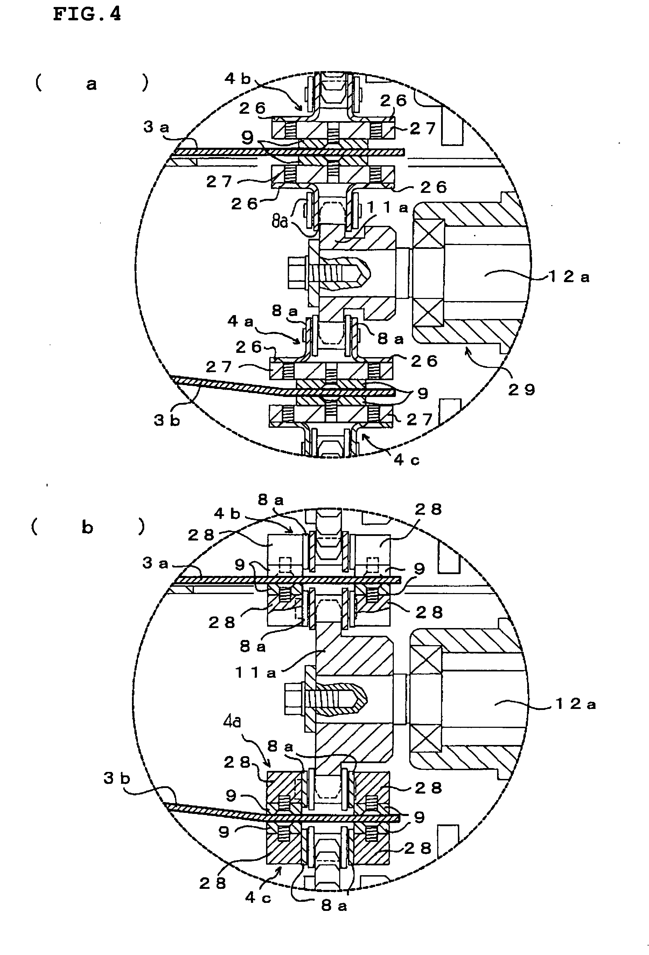

Next, referring to Fig. 4, the fixing structure for the magnets 9 in regard to the chain (rotating belt) 8 at the aforesaid rotating members 4a, 4b and 4c will be described as follows.
In Fig. 4 (a), the magnet fixing pieces 26 are integrally protruded and formed toward an outside of right angle horizontal direction at the outer peripheral edge of an approximate central position in a longitudinal direction of each of the link plates 8a constituting the chain 8, base plates 27 are fixed by screws against the magnet fixing pieces 26 of outer and inner (right and left) link plates 8a and then the magnets 9 are fixed with screws to the upper surface (outer surface9 central parts of the base plates 27. The magnets are applied with a spot facing and fixed with screws so as to cause the outer surfaces (surfaces abutting against the belt) of the magnets 9 to be in flush with the belt. In addition, fixing of the magnets to the base plates 27 is not limited to the screw fixing process, but fixing with adhesive agent can also be applied and all the prior art fixing methods can be applied. However, in the case of screw fixing operation, it has an advantage that replacement of the damaged magnet can be easily carried out.

Fig. 4 (b) shows a process in which a cubic shaped fixing base 28 is fixed to the outer surface of each of the link plates 8a constituting the chain 8 in an approximate central position in a longitudinal direction with adhesive agent and the like and the magnets 9 are fixed with screws on the upper surface of the fixing base 28. Further, the magnet screw fixing is carried out such that the magnets are applied with a spot facing in the same manner as that shown in Fig. 4 (a) so as to cause the surfaces of the magnets 9 to be in flush with the belt. In the case of this fixing structure, each of the magnets 9 is fixed to the opposing inner and outer (right and left) link plates 8a.

As the magnets 9 fixed to the chain 8 under the aforesaid structure, neodymium or ferrite and the like is applied. Water rinsing is sometimes required after processing when the curved belt conveyor is used, and in the case of conveyor requiring water rinsing, it is profitable to use, as the aforesaid magnet material, the magnet material such as ferrite magnet showing no stain even if the magnet is immersed in water.

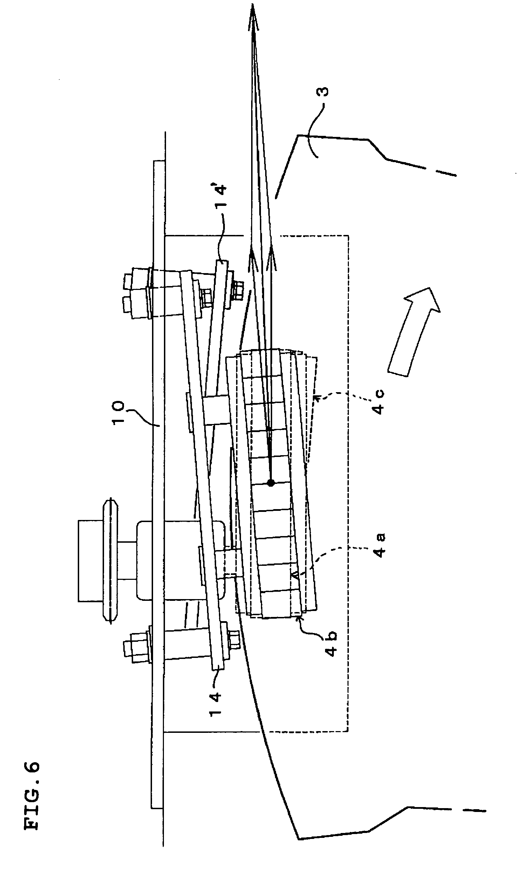

In the aforesaid preferred embodiment, although the centerlines of the rotating members 4a, 4b and 4c for holding the outer peripheral edges of the forward passage side 3a and the return passage side 3b of the endless curved belt are arranged to be overlapped on the same line as seen in a top plan view, it is also applicable that the centerlines of the rotating members 4b, 4c arranged above and below the belt as shown in Fig. 6 are arranged while the extremity ends in their rotating direction are faced outward by a predetermined angle with respect to the centerline of the rotating member 4a arranged at the central part and the held moving direction are faced toward outside in a diametrical direction.
That is, the rotating mechanism 4 for rotating the forward passage side 3a of the endless curved belt 3 and common rotating members 4a in the rotating mechanism 4 for rotating the return passage side 3b are arranged at an approximate right angle with respect to a centerline connecting the turning center with an approximate center in a peripheral direction of the endless curved belt in the same manner as that of the aforesaid preferred embodiment, and the other rotating member 4b of the rotating mechanism 4 at the forward passage side 3a is inclined and arranged such that the extremity end of the rotating belt 8 in its rotating direction faces toward the outside in a diametrical direction with respect to the rotating member 4a. Similarly, the other rotating member 4c of the rotating mechanism 4' at the return passage side 3b is inclined and arranged such that the extremity end of the rotating belt 8 in its rotating direction faces toward the outside in a diametrical direction with respect to the rotating member 4a.
Further, in this case, since the center of each of the shafts for driving the rotating members 4a, 4b and 4c is not positioned on the same line as seen in a top plan view, the rotating force for driving the rotating member 4a at the middle stage as indicated in the aforesaid preferred embodiment, can not be used for rotating the rotating members 4b and 4c arranged above and below the belt under utilization of the gear transmitting mechanism. Accordingly, the driving mechanism is arranged for every rotating member or the upper and lower rotating members are rotatingly driven under attracting action of the magnets 9.

Although the holding structure of the belts in the aforesaid preferred embodiment is constructed such that the magnets 9 are fixed to the rotating belts arranged above and below the belt and the belt is held under attracting actions of the magnets, it is also applicable to provide a constitution in which the belt is held by the resilient members.
For example, Figs. 4(a) and (b) show a form in which pressing plates biased outward by a spring in place of magnets 9 are arranged at the upper surfaces of the base plates 27 or fixing tables 28, and the belt is held by the pressing plates to each other.

### [Preferred Embodiment 2]

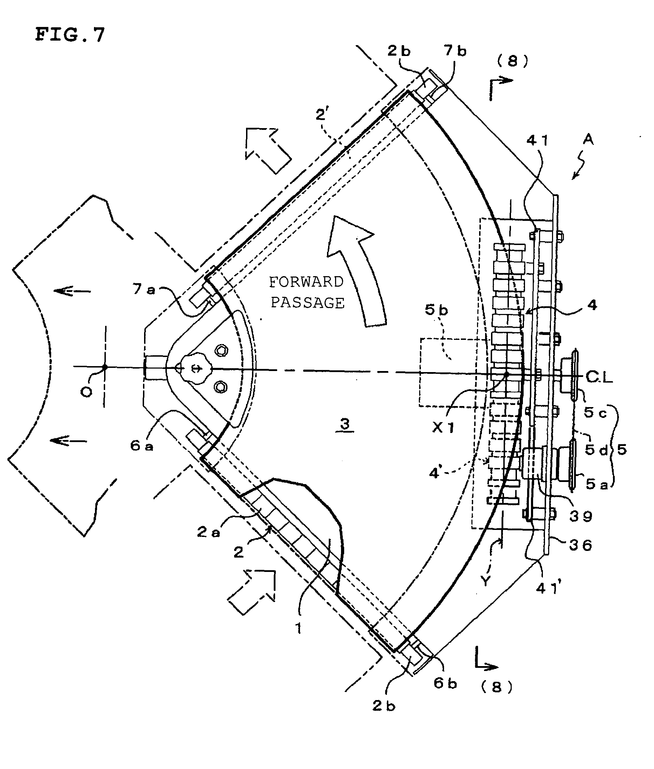

Fig. 7 shows a curved belt conveyor A' illustrating another example of arrangement of the rotating mechanism, wherein the curved belt conveyor A' is constituted, in the same manner as that found in the preferred embodiment 1, such that the tail rollers 2, 2' of turning-back members are rotatably arranged, on both ends of the plate-like frame 1 in a plane, substantially fan shape, with an opening angle of 90° as seen in a top plan view, and the endless curved belt 3 is installed over both tail rollers 2, 2' to form an approximate arcuate transferring passage as seen in its top plan view. Then, at the middle position in a peripheral direction of the frame 1, the rotating mechanisms 4, 4' comprised of a pair of upper and lower rotating members 4a, 4b and 4a, 4c for holding the outer peripheral edges of the forward passage side and the return passage side of the endless curved belt 3 are arranged on a line Y crossing at a right angle with a centerline C.L extending from the turning center O of the endless curved belt 3 to a diametrical direction, and the driving mechanism 5 for driving and rotating the rotating member 4a constituting the rotating mechanisms 4, 4' is arranged along the outer peripheral edge of the frame 1. Further, since a supporting structure for the endless curved belt 3 is the same as that of the aforesaid preferred embodiment, the same constituting members are denoted by the same reference numbers as those of the aforesaid preferred embodiment and their detailed description will be eliminated.

The rotating mechanisms 4, 4' for driving and rotating the endless curved belt 3 are constituted by the driving rotating member 4a rotated in an endless manner that is arranged between the outer peripheral edges of the forward passage side 3a and the return passage side 3b of the endless curved belt 3 and the driven rotating members 4b, 4c rotated in an endless manner that are arranged outside (upper side) the belt of the forward passage side 3a in correspondence with the driving rotating member 4a and outside (lower side) the belt of the return passage side 3b. Then, the rotating mechanism 4 for driving the forward passage side belt 3a of the endless curved belt is constituted by the driving rotating member 4a and the driven rotating member 4b arranged above and below the forward passage side belt 3a. The rotating mechanism 4' for driving the return passage side belt 3b of the endless curved belt is constituted by the driving rotating member 4a and the driven rotating member 4c arranged above and below the return passage side belt 3b.

The driving rotating member 4a is arranged on a line Y passing through an optional point x1 inside the outer peripheral edge of the endless curved belt 3 on a line of the centerline C.L extending from the turning center O in a diametrical direction and crossing the centerline C.L at a right angle while an approximate central part in a machine length of the driving rotating member 4a is positioned on the point x1. Further, although it is rational that the centerline C.L is placed near a radial line faced from the centerline O toward the central part of the machine body, an optional position may be applied if the radial line extends from the turning center O in the diametrical direction.
The driven rotating member 4b is arranged with the centerline in a machine length outside (upper side) of the belt of the forward passage side 3a of the endless curved belt 3 positioned on the line Y, an approximate center (the center of the toothed belt) at an upstream side in a belt advancing direction aligned with the point x1, and the downstream side in the rotating direction faced toward the downstream side in an advancing direction of the curved belt.
The driven rotating member 4c is arranged with the centerline in a machine length outside (lower side) of the belt of the return passage side 3b of the endless curved belt 3 positioned on the line Y, an approximate center (the center of the toothed belt) at an upstream side in a belt advancing direction aligned with the point x1, and the downstream side in the rotating direction faced toward the downstream side in an advancing direction of the curved belt.
That is, the driven rotating member 4b, driving rotating member 4a and driven rotating member 4c are arranged to be overlapped to each other on the line Y as shown in Fig. 7.

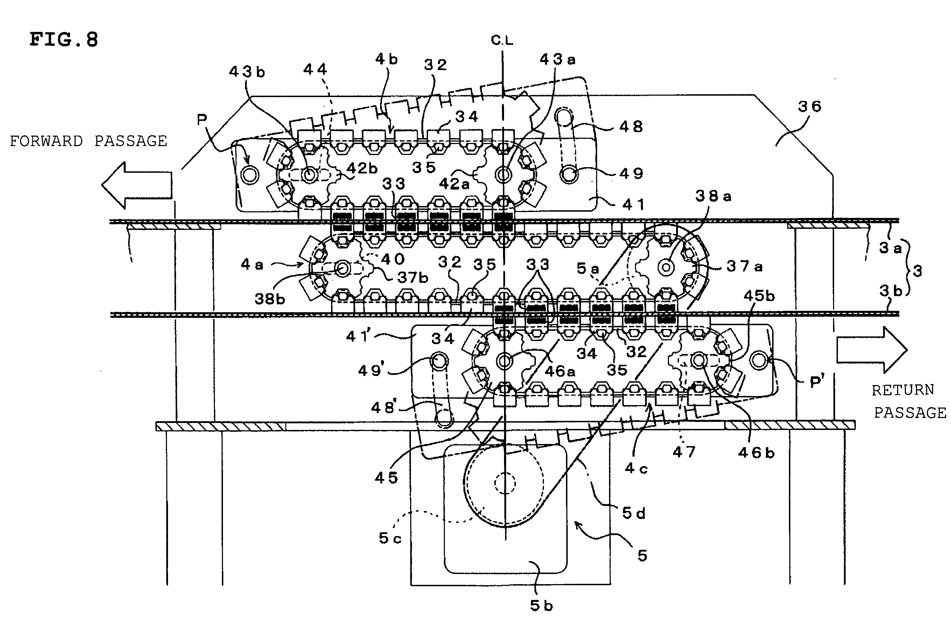

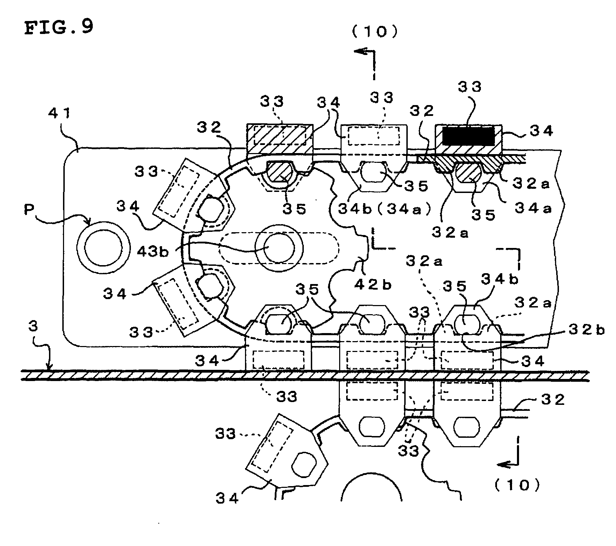

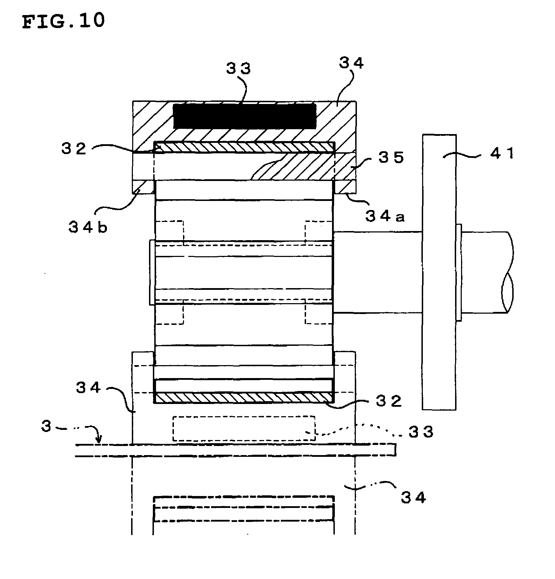

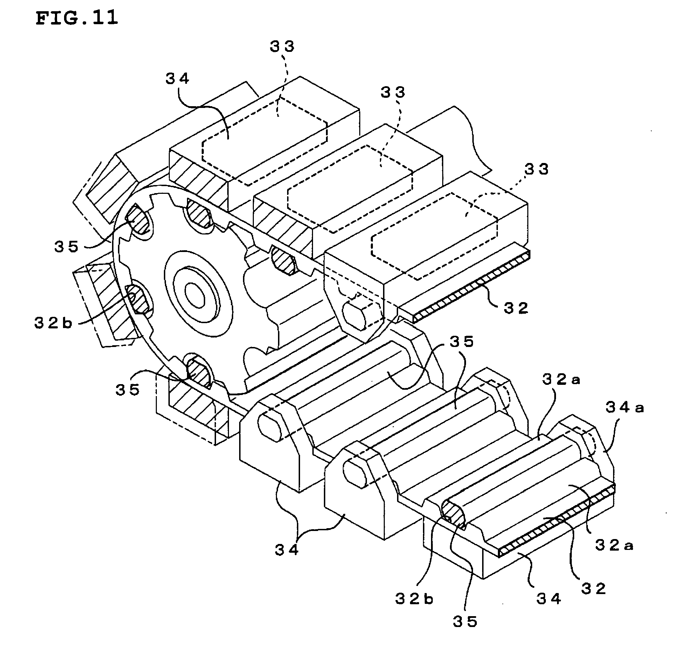

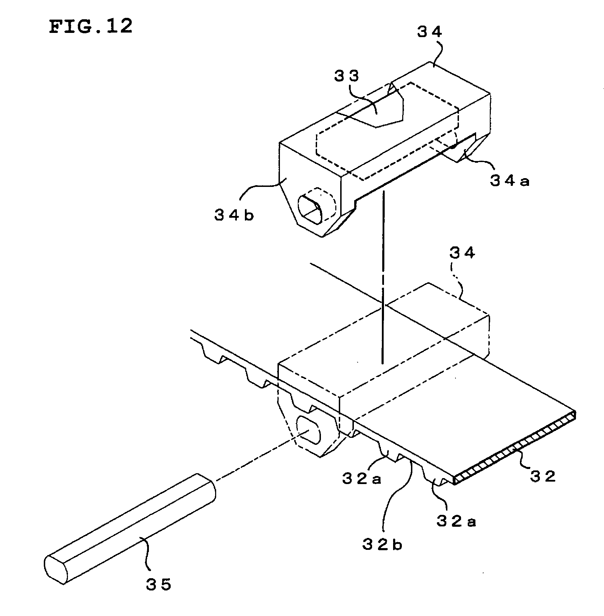

The driving rotating member 4a, driven rotating members 4b, 4c constituting the rotating mechanisms 4, 4' will be described as follows. All the driving rotating member 4a, driven rotating members 4b, 4c have the same structure to each other, so that the driving rotating member 4a will be described as follows (refer to Figs. 8 and 9).
The driving rotating member 4a is constituted by a toothed belt (rotating belt) 32 rotated in an endless manner and magnets 33 that are fixed to the outside surface of the toothed belt 32 in a predetermined gap.
As shown in Figs. 10 to 12, fixing of the magnets 33 to the toothed belt 32 is carried out such that the magnets 33 are integrally embedded into the resin blocks 34 covering the toothed belt 32 over its width direction, fixing pins 35 are struck into protrusion edges 34a, 34b integrally protruded at the front and rear ends of the blocks 34 and protruded from the end edge in the width direction of the toothed belt 32 in an inward direction, and thereby the blocks 34 having the magnets 33 embedded therein are integrally fixed to the outer surface of the toothed belt 32. Magnetic excitation for the magnets 33 is carried out by applying voltage after they are embedded into the blocks 34 and formed.
In addition, a position where the blocks 34 having the magnets embedded therein are fixed to the toothed belt 32 is between the protrusions 32a protruded at the inner surface of the toothed belt 32 at a predetermined pitch, and the fixing pins 35 are protruded at cavities 32b between the protrusions 32a. Arrangement of the fixing pins 35 corresponds to a position where the outer peripheral surfaces of the fixing pins 35 contact the bottom surfaces of the cavities 32b, thereby the blocks 34 are integrally connected to the toothed belt 32 without any looseness.
In addition, since the endless curved belt is held under attracting action between N-pole and S-pole of the magnet 33, when the pole of the magnets 33 installed at the driving rotating member 4a arranged at the middle part is N-pole, the pole of the magnets 33 installed at the driven rotating members 4b, 4c arranged above and below the belt is an S-pole.

The driving rotating member 4a is wound around the toothed pulleys 37a, 37b rotatably pivoted in a predetermined gap at a fixing plate 36 fixed vertically along the outer peripheral edge at a peripheral middle position of the frame 1. Then, the shaft 38a having one toothed pulley 37a fixed thereto is protruded outside the fixing plate 36 through the bearing 39 attached to the fixing plate 36, and the driving mechanism 5 is connected to the protrusion part. In addition, the shaft 38b having the other toothed pulley 37b fixed thereto is fitted into the long hole 40 opened at the fixing plate 36 such that its position can be adjusted so as to enable the inter-shaft distance with the shaft 38a. With this arrangement, the shaft 38b is moved along the long hole 40 and adjusted to enable a tension state of the toothed belt 32 to be adjusted.

The driven rotating member 4b is wound around the toothed pulleys 42a, 42b rotatably pivoted in a predetermined gap at the auxiliary fixing plate 41 fixed inside the fixing plate 36. Then, the shaft 43b having the toothed pulley 42b fixed thereto that is positioned on a downstream side in an advancing direction of the endless curved belt 3 is fitted to the long hole 44 opened at the auxiliary fixing plate 41 such that an inter-shaft distance with respect to the shaft 43a having the other toothed pulley 42a positioned on an upstream side in the advancing direction may be adjusted. With this arrangement, the shaft 43b is moved and adjusted along the long hole 44 to enable a tension state of the toothed belt 32 to be adjusted. Further, if only the tension state of the toothed belt 32 is adjusted, although the shaft of which movement is to be adjusted may be either one of the shafts 43a, 43b, the toothed pulley 42b positioned on a downstream side in an advancing direction of the endless curved belt 3 can be moved and adjusted so as to better assure action for biasing the outer peripheral edge of the endless curved belt 3 to be described later outside in a diametrical direction.

The driven rotating member 4c is wound around the toothed pulleys 45a, 45b rotatably pivoted in a predetermined gap in a peripheral direction at the auxiliary fixing plate 41' fixed inside the fixing plate 36. Then, the shaft 46b having the toothed pulley 45b fixed thereto that is positioned on a downstream side in an advancing direction of the endless curved belt 3 is fitted to a long hole 47 opened at the auxiliary fixing plate 41' such that an inter-shaft distance with respect to the shaft 46a having the other toothed pulley 45a fixed thereto and positioned on the upstream side in an advancing direction may be adjusted. With this arrangement, the shaft 46b of the toothed pulley 45b is moved and adjusted along the long hole 47 to enable a tension state of the toothed belt 32 to be adjusted. Further, a tension adjustment of the toothed belt 32 of the driven rotating member 4c at the return passage side rotating mechanism 4' enables the toothed pulley 45b positioned on a downstream side in an advancing direction to be moved and adjusted so as to better assure action for biasing the outer peripheral edge of the endless curved belt 3 toward outside in a diametrical direction in the same manner as that of the tension state adjustment of the toothed belt 32 of the driven rotating member 4b at the return passage side rotating mechanism 4' described above.

Then, the auxiliary fixing plate 41 having the rotating member 4b fixed thereto and the auxiliary fixing plate 41' having the rotating member 4c fixed thereto are supported to the fixing plate 36 provided with the rotating member 4a such that it can be oscillated vertically.
More practically, as shown in Fig. 8, the auxiliary fixing plate 41 having the rotating member 4b fixed thereto and the auxiliary fixing plate 41' having the rotating member 4c fixed thereto are supported vertically oscillatably around shaft supporting portions P, P' at the toothed pulleys 42b, 45b positioned at the downstream side in an advancing direction of the endless curved belt 3, and the opposite sides of the shaft supporting portions P, P' are provided with stopper pins 49, 49' fitted to the arcuate grooves 48, 48' restricting a range of vertical oscillation that are opened at the fixing plate 36.
With the aforesaid constitution, under a condition in which the auxiliary fixing plates 41, 41' are supported in a horizontal state, as shown in Fig. 8, the rotating members 4a, 4b and 4c keep their parallel states, the forward passage side 3a of the endless curved belt 3 is held with the rotating member 4b and the rotating member 4a, and the return passage side 3b of the endless curved belt 3 is held by the rotating member 4a and the rotating member 4c so as to cause the endless curved belt 3 to be rotated in a peripheral direction. Then, when the auxiliary fixing plate 41 is oscillated upward around the shaft supporting part P and the auxiliary fixing plate 41' is oscillated downward around the shaft supporting part P', respectively, the rotating member 4b and the rotating member 4c are moved in a spaced-apart direction with respect to the rotating member 4a positioned at the middle as indicated by an imaginary line in Fig. 8, thereby their held states up to now are released. With this arrangement, engagement or disengagement of the endless curved belt 3 can be easily carried out.

The driving mechanism 5 is used for rotatingly driving the rotating member 4a, and as shown in Fig. 8, a driving sprocket 5a is fixed to the shaft 38a having the toothed pulley 37a fixed thereto for supporting the rotating member 4a arranged at the middle part in a vertical direction, a chain 5d is wound around the driving sprocket 5a and a sprocket 5c fixed to the output shaft of a motor 5b suspended down and fixed to the frame 1, and the rotating member 4a is rotatingly driven by a rotating force of the motor 5b. Further, this driving mechanism 5 is not restricted to the form shown in the figure, but a driving method employed today can be properly selected such as a driving system in which a gear and a timing belt or a hollow shaft type geared motor is fixed to eliminate a sprocket and the like.

Then, the driven rotating member 4b for holding the forward passage side 3a of the endless curved belt 3 in opposition to the driving rotating member 4a and the driven rotating member 4c for holding the return passage side 3b of the endless curved belt 3 are operated such that the magnets 33 installed at each of the rotating members 4a, 4b and 4c attract each other while holding the belt, thereby the rotating members 4b, 4c are driven and rotated through rotation of the rotating member 4a.

As the magnets 33 fixed to the toothed belts (rotating belts) 32 of the rotating members 4a, 4b and 4c through the resin block 34, neodymium or ferrite is used. Although water rinsing is sometimes required after use under a state of usage of the curved belt conveyor, the magnets 33 are embedded into the resin blocks 34 as described above, so that even if the water rinsing is carried out, water is not splashed directly over the magnets and it is possible to prevent the magnets from being rusty.

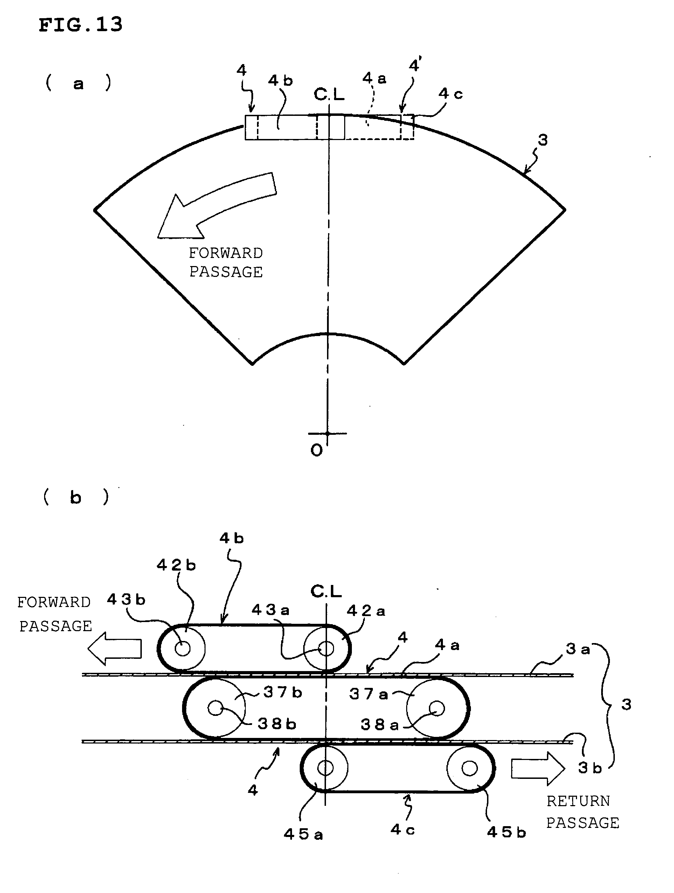

Fig. 13(a) is an illustration for showing an arrangement relation of the rotating mechanisms 4, 4' , wherein the driving rotating member 4a and the driven rotating members 4b, 4c are arranged on a line crossing, at a right angle, the centerline C.L extending from the turning center O of the endless curved belt 3 to an approximate central part (approximate central part in a peripheral direction) of the machine body as shown in Fig. 13(b).

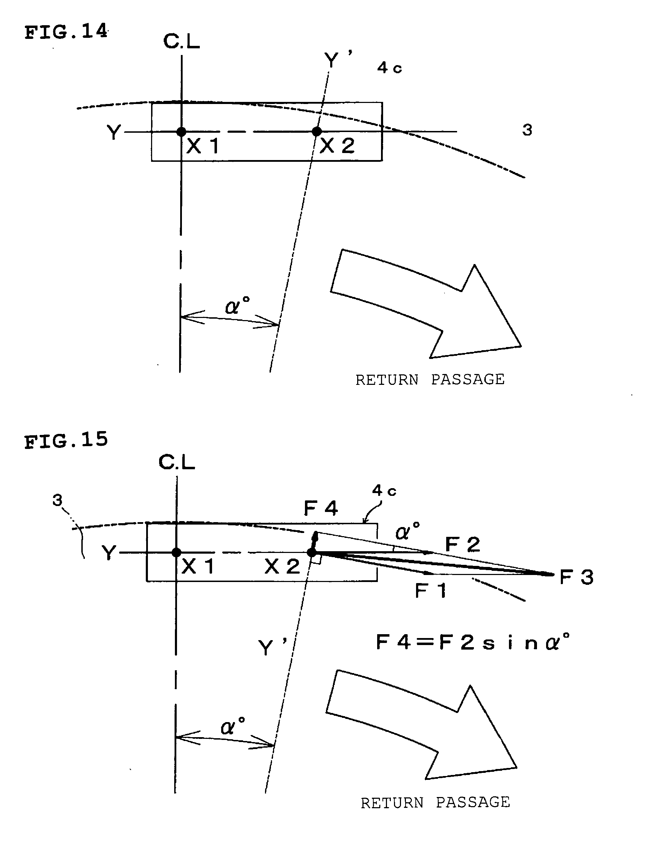

Next, dynamic action applied when the rotating mechanisms 4, 4' are rotated will be described in reference to Figs. 14 and 15 on the basis of the driven rotating member 4c at the return passage side.
Fig. 14 is an illustrative view for showing an arrangement of the driven rotating member 4c for holding the belt at the return passage side in the endless curved belt 3, wherein a centerline Y (refer to Fig. 7) in a machine length of the driven rotating member 4c crosses at a right angle with respect to the centerline C.L extending from the turning center O of the endless curved belt 3 in a diametrical direction, and a crossing point between the centerline and the aforesaid centerline C.L is defined as x1. A shaft axis of the toothed pulley 45a of the driven rotating member 4c is arranged on the crossing point x1, the magnets 33 of the toothed belt 32 on this line attract the magnets 33 of the toothed belt 32 of the corresponding driving rotating member 4a, and the belt is rotated through the driving rotation of the driving rotating member 4a. With such an arrangement, the crossing point x1 is rotated along with a rotation of the driving rotating member 4a, and it is moved on the centerline Y toward the advancing direction of the curved belt. A point where it is moved optionally on the centerline Y is defined as x2. A relation of forces at the point x2 after its movement is illustrated by a vector diagram (refer to Fig. 15).

The centerline extending from the turning center O to the point x2 is defined as Y'. Then, a force acted from the point x2 in a direction perpendicular to the centerline Y' is defined as F₁.
The force F₁ acts in a tangential direction, i.e. at a right angle with respect to the centerline Y' when the endless curved belt 3 turns around the turning center O. In addition, the force acts on the centerline due to rotation of the driven rotating member 4c. That is, a force acted on an optional point x2 becomes a force F₂ acted on the extension line of the centerline Z. Accordingly, a resultant force F3 acts in a direction of resultant force of each of the forces F1 and F2 acted on the belt 3b at the return passage site of the endless curved belt 3. With this operation, a force F4 (F2sinα°) biasing the endless curved belt 3 in a direction of F3, that is, in an outward direction is generated (refer to Fig. 15).
Then, the force F4 biasing it in an outward direction continuously acts only for an attraction range (a range from the attraction starting position to the attraction releasing position) of both the driving rotating member 4a and the driven rotating member 4c constituting the rotating mechanism 4' for holding the belt at the return passage side. Accordingly, the continuous biasing force directed outward is realized only by an overlapped length of a pair of upper and lower rotating members constituting the rotating mechanism. In addition, since they are moved while the endless curved belt is being held between them, even if oil or powder is adhered to the endless curved belt, its influence is minute as compared with that of frictional driving operation, and stable running of the endless curved belt can be assured.
The return passage side has been described in this paragraph, the forward passage side can be similarly described.

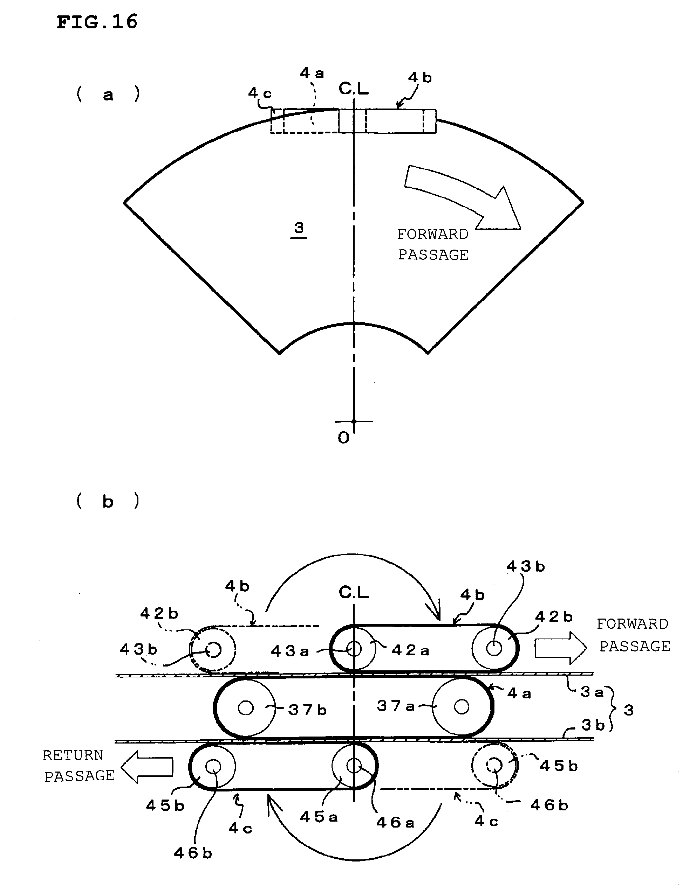

Fig. 16 shows another preferred embodiment of the curved belt conveyor A' in accordance with this invention. The driven rotating members 4b, 4c arranged above and below the driving rotating member 4a in the aforesaid preferred embodiment can be entirely reversed by 180° around the shafts 43a, 46a of the toothed pulleys 42a, 45a positioned at an upstream side with respect to the belt advancing direction. That is, as shown in Fig. 16(b), with reversing rotation by 180° from the positions in the aforesaid preferred embodiment (the position indicated by an imaginary line), the positions of the toothed pulleys 42a, 45a of the driven rotating members 4b, 4c remain unchanged but each of the other toothed pulleys 42b, 45b is moved to a symmetrical position (a position indicated by a solid line) to that of the aforesaid preferred embodiment.
Accordingly, if the rotating direction of the driving rotating member 4a is changed over to a direction opposite to that of the aforesaid preferred embodiment, the rotating direction of the endless curved belt 3 becomes an arrow-indicated direction as shown in Fig. 16(a) and the belt rotates in a direction opposite to the rotating direction in the aforesaid preferred embodiment. Then, the force for biasing the endless curved belt outward in a diametrical direction is similarly generated under a reverse rotation to assure a stable running because the arrangement relation of the driven rotating members 4b, 4c with respect to the driving rotating member 4a is not changed even if the driven rotating members 4b, 4c are reversed by 180°.

In the case that the driven rotating members 4b, 4c can be reversed by 180°, each of the auxiliary fixing plates 41, 41' fixed with the rotating members 4b, 4c is reversed around the shafts 43a, 46a by 180° and they are fixed under the reversed state. In addition, although toothed pulley shaft with respect to the auxiliary fixing plate can be supported by usual fitting between a round hole and a shaft, the hole for supporting the shaft can be made as a long hole that is long in a vertical direction and the toothed pulley shaft can be slid up and down. In addition, the toothed pulley shaft is biased by resilient members fixed to the auxiliary fixing plates 41, 41' and always be pushed against the belt.

Although the endless curved belt holding structure in the aforesaid preferred embodiment is made such that the magnets 33 are fixed to the rotating belts arranged above and below the belt and the belts are held under attracting action of the magnets, it may be constituted to hold the belts with resilient members.
For example, under the form shown in Fig. 8, the pressing plates biased outward with springs are installed at the surfaces of the resin blocks 34 oppositely facing against the endless curved belt, and the belts are held by the pressing plates themselves.

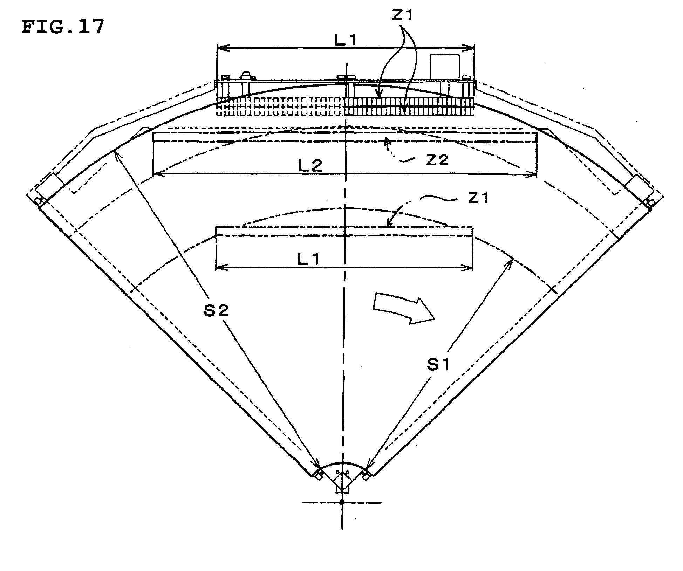

Fig. 17 is a view for illustrating another example of arrangement of the rotating member at the curved belt conveyor in accordance with this invention. Since a configuration of the rotating member is the same as that shown in Fig. 8 except a rotating direction (a rotating direction of the forward passage) of the curved belt, its detailed description will be eliminated. "Length L1" and "length L2" to be described later express a length of the rotating member in it's rotating direction at the middle stage (corresponding to the driving rotating member 4a shown in Fig. 8) arranged between the forward passage side (upper side) and the return passage side (lower side).
Although rotation of the endless curved belt in this invention is carried out under a held transferring operation with a pair of upper and lower rotating members, capabilities of the pair of upper and lower rotating members (a length in the advancing direction and a lateral width of the rotating members and the like) for use in transferring the endless curved belt under its held condition are also changed in response to a value of size of the belt width of the endless curved belt (a size ranging from the inner edge near the turning center to an outer edge in a diametrical direction).
For example, one row of rotating members Z1 with a length L1 is arranged with respect to the endless curved belt with a belt width S1 shown in Fig. 17. Then, in the case that an attempt is made to constitute an endless curved belt with a wider belt width S2 (S2>S1) than the belt width S1, poor capability occurs at the rotating member Z1 with the length L1 and so it is necessary to arrange the rotating member Z2 (its lateral width is the same as that of Z1) with the length L2 (L2>L1). Since it is necessary that the rotating members with a length L2 hold the endless curved belt over their length, the arrangement position of the rotating member Z2 is a position where a length of size (arch) between the two points where both ends of a line crossing at a right angle with respect to a centerline extending from the turning center in a diametrical direction and an outer peripheral edge of the endless curved belt cross each other is approximately equal to the length L2 of the rotating member Z2.

In the case that a capability generated by the rotating member Z2 with a length L2 corresponds to approximately twice a capability generated by the rotating member Z1 with the aforesaid length L1, a similar held transferring operation can be carried out while two sets of the rotating members Z1 with a length L1 are being arranged. That is, as indicated by a solid line in Fig. 17, two rows of rotating members Z1 with a length L1 are arranged in parallel to each other. In this case, a position where the rotating member Z1 is arranged is a position where a length of size (arch) between the two points where both ends of a line crossing at a right angle with respect to the centerline extending from the turning center in a diametrical direction and the outer peripheral edge of the endless curved belt cross each other is approximately the same as the length L1 of the rotating member. Accordingly, a position where two rows of rotating members with a length L1 are arranged becomes a position where it is moved outside in a diametrical direction of the position where the rotating member with a length L2 is arranged.

Accordingly, when the belt width is increased, although elongation of the length of the rotating members in compliance with the increased belt width assures a driving force required for a held transferring operation, a plurality of sets of rotating members with a certain specified length are arranged in parallel without elongating the length of the rotating member to assure a similar driving force. Then, in the case that a plurality of rows of rotating members are arranged, some advantages can be attained as follows as compared with that of the constitution in which one long row of rotating members is arranged.
(1) A transferring effective width of the endless curved belt can be assured wide.
(2) Rotational members of different lengths are not required to be prepared in response to a belt width size.
(3) Although the rotating member in each of the rows arranged in parallel can also be driven with one driving source, when they are driven by each of the independent driving sources, they can be driven in compliance with a peripheral speed of each of the rows.

The curved belt conveyor of this invention is constituted such that one or both outer peripheral edges of the forward passage side or the return passage side of the endless curved belt are held by the endless rotating members arranged above and below the belt while the belt is held therebetween, and the endless curved belt is turned in a peripheral direction through movement of the held position by the endless rotation of the rotating members, so that the endless curved belt can be rotated stably and positively. Then, since the endless curved belt is held with rotating members arranged above and below the belt and having the holding portions installed inside the belt, the holding portions do not protrude outward substantially from the belt in a diametrical direction, with an advantage that the entire conveyor can be constituted in a compact size.

This invention is not limited to the aforesaid preferred embodiments, and some modifications can be properly carried out without departing a scope of gist of this invention.
(1) Although the forward passage side rotating mechanism and the return passage side rotating mechanism are arranged at the same positions by sharing the driving rotating members, each of the forward passage side rotating mechanism and the return passage side rotating mechanism can be separately arranged.
(2) A fixing form of the magnets with respect to the rotating belts of the rotating members is not limited to the embedded form shown in the figure, and any form in which the magnets are fixed outside the rotating belts through pressing fittings and the like under their exposed state can be applied. In addition, the shape of each of the magnets is not limited to a rectangular flat-plate shown in the figure, and any of the disks and the like can be applied.
(3) One or both of a pair of upper and lower rotating members holding the belt therebetween may be of a synchronous driving type.
(4) The surfaces of the rotating members (surfaces abutted against the endless curved belt) are not limited to a flat surface, and corrugated surfaces can be applied.
(5) The centerline C. L extending from the turning center O of the curved belt toward the diametrical direction is not limited to the central part of the machine body indicated in the preferred embodiment, and it is satisfactory if the line is a radial line extending from the turning center O to a diametrical direction.
(6) The curved belt conveyor of this invention is not limited to one with an opening angle of approximate 90° as seen in a top plan view indicated in the preferred embodiment, and it may be a value less than 90° (for example, 45°, 60°) or more than 90° (for example, 180°).

### Brief Description of the Drawings

[Fig. 1] is a partial cut-away top plan view for showing one example of preferred embodiment of the curved belt conveyor of this invention.
[Fig. 2] is an enlarged sectional view taken along line (2)-(2) of Fig. 1.
[Fig. 3] is an enlarged sectional view taken along line (3)-(3) of Fig. 2.
[Fig. 4] is an enlarged view for showing a fixing structure of magnets to a chain, wherein (a) is a substantial enlarged view of Fig. 3 and (b) is an enlarged view for showing another fixing structure.
[Fig. 5] shows a driving mechanism for the rotating members and an upper and lower oscillating mechanism, wherein (a) is a front view for showing a state for holding the belt and (b) is a front view for showing a state in which the auxiliary fixing plate supporting the rotating members is oscillated to release the held state.
[Fig. 6] is a top plan view for showing a constitution in which the upper and lower arranged rotating members are inclined and arranged with respect to the rotating member arranged at the middle stage.
[Fig. 7] is a partial cut-away top plan view for showing one example of the preferred embodiment of the curved belt conveyor according to this invention.
[Fig. 8] is an enlarged sectional view taken along line (8)-(8) of Fig. 7.
[Fig. 9] is an enlarged sectional view of a substantial part.
[Fig. 10] is an enlarged sectional view taken along line (10)-(10) of Fig. 9.
[Fig. 11] is a partial cut-way perspective view for showing a configuration of the rotating member.
[Fig. 12] is a partial cut-away decomposed perspective view for showing a fixing structure of a magnet with respect to a toothed belt (a rotating belt).
[Fig. 13] shows an arrangement relation of the rotating members in the preferred embodiment in Fig. 7, wherein (a) is a top plan view and (b) is a substantial enlarged sectional view.
[Fig. 14] is an illustrative view for showing an arrangement of the rotating member at the return passage side.
[Fig. 15] is an illustrative view for showing a relation of forces generated through rotation of the rotating member shown in Fig. 14.
[Fig. 16] shows a form of another preferred embodiment, wherein (a) is a top plan view and (b) is a substantial enlarged sectional view.
[Fig. 17] is an illustrative view for showing a form of a still further preferred embodiment.

### Description of the Reference Numerals

- A, A':: curved belt conveyor 1: frame
- 2, 2':: returning member (tail roller)
- 3:: endless curved belt
- 4, 4':: rotating mechanism 4a to 4c: rotating member
- 5:: driving mechanism
- 8, 32:: rotating belt (chain, toothed belt)
- 9, 33:: magnet 10, 34: resin block
- 11, 35:: fixing pin

## Claims

1. A curved belt conveyor **characterized in that** an endless curved belt showing an arcuate shape as seen in a top plan view is wound around returning members arranged at both sides in a peripheral direction of a frame showing an arcuate shape as seen in a top plan view, one or both of outer peripheral edges of a forward passage side or a return passage side of the endless curved belt positioned between the returning members are held by the endless rotating members correspondingly arranged vertically while holding the endless curved belt, and the endless curved belt is rotated in a peripheral direction through movement of the holding position under endless rotation of the rotating members.

2. The curved belt conveyor according to claim 1 **characterized in that** the rotating members are constituted by endless rotating belts arranged at inner positions in a diametrical direction from the outer peripheral edges of the endless curved belt, and magnets or metallic plates attracting the magnets fixed to the outer surfaces of the rotating belts spaced apart by a predetermined gap, the curved belt is held under attraction of the magnets of the corresponding rotating members while holding the curved belt or attraction among the magnets and the metallic plates, and then transferred.

3. The curved belt conveyor according to claim 2 **characterized in that** the rotating belts of the rotating members are chains and the flat plate-like magnets or metallic plates are fixed to the chains through fixing pieces.

4. The curved belt conveyor according to any one of claims 1 to 3 **characterized in that** the rotating members are arranged between the forward passage side and the return passage side of the endless curved belt and outside of one or both of the forward passage side and the return passage side such that a centerline of each of these rotating members is arranged on the same line as seen in a top plan view.

5. The curved belt conveyor according to any one of claims 1 to 3 **characterized in that** the rotating members are arranged between the forward passage side and the return passage side of the endless curved belt and outside of one or both of the forward passage side and the return passage side, the centerlines of the rotating members arranged outside the forward passage side and the return passage side cross the centerline of the rotating member at the middle stage, such that the extremity ends in a rotating direction may face outside with respect to the centerline of a central rotating member in the middle.

6. The curved belt conveyor according to any one of claims 1 to 3 **characterized in that** one of the rotating members arranged outside the forward passage side or the return passage side of the endless curved belt is constituted such that it can be changed over in engagement or disengagement with respect to the other corresponding rotating member.

7. The curved belt conveyor according to claim 4 **characterized in that** one of the rotating members arranged outside the forward passage side or the return passage side of the endless curved belt is constituted such that it can be changed over in engagement or disengagement with respect to the other corresponding rotating member.

8. The curved belt conveyor according to claim 5 **characterized in that** one of the rotating members arranged outside the forward passage side or the return passage side of the endless curved belt is constituted such that it can be changed over in engagement or disengagement with respect to the other corresponding rotating member.

9. The curved belt conveyor according to claim 1 **characterized in that** the rotating members are arranged near the outer peripheral edges of the endless curved belt and on a line crossing at a right angle with respect to a centerline extending from a turning center of the curved belt in a diametrical direction, one rotating member of a pair of upper and lower rotating members is arranged with a central part in a machine length of the rotating member in compliance with a crossing point of line crossing the centerline at a right angle, the other rotating member is arranged with an upstream side in a belt advancing direction positioned on the central part in a machine length in the one rotating member or positioned at a downstream side in the belt advancing diction from the central part.

10. The curved belt conveyor according to claim 9 **characterized in that** the rotating members are constituted by endless rotating belts arranged at inner positions in a diametrical direction from the outer peripheral edges of the endless curved belt, and magnets or metallic plates attracting the magnets fixed to the outer peripheral surfaces of the rotating belts spaced apart by a predetermined gap, the curved belt is held under attraction of the magnets of the corresponding rotating members while holding the curved belt or attraction among the magnets and the metallic plates, and then transferred.

11. The curved belt conveyor according to claim 10 **characterized in that** the rotating belts of the rotating members are toothed belts and magnets or metallic plates are fixed to the rotating belts through fixing members.

12. The curved belt conveyor according to claim 11 **characterized in that** the fixing members are constituted by resin blocks having magnets or metallic plates embedded therein and fixing pins arranged over protrusion edges across the resin blocks, the resin blocks having magnets or metallic plates embedded therein are applied over the outer peripheral surfaces of the toothed belts, and the fixing pins are struck over the front and rear protrusion edges across the resin blocks protruded from both sides of the toothed belt in its width direction toward inside so as to cause the blocks to be integrally installed at the toothed belt.

13. The curved belt conveyor according to any one of claims 9 to 12 **characterized in that** the pair of rotating members are constituted by one driving rotating member arranged between the forward passage side and the return passage side of the endless curved belt as well as driven rotating members arranged outside both forward passage side and return passage side in correspondence with the one driving rotating member, each of the driven rotating members at the forward passage side and the return passage side is arranged from the central part in a machine length of the driving rotating member to the downstream side in a belt advancing direction.

14. The curved belt conveyor according to any one of claims 9 to 12 **characterized in that** one of the rotating members arranged outside the forward passage side or the return passage side of the endless curved belt is constituted such that it can be changed over in engagement or disengagement with respect to the other corresponding rotating member.

15. The curved belt conveyor according to claim 13 **characterized in that** one of the rotating members arranged outside the forward passage side or the return passage side of the endless curved belt is constituted such that it can be changed over in engagement or disengagement with respect to the other corresponding rotating member.

16. The curved belt conveyor according to claim 13 **characterized in that** the driven rotating member is set such that the entire driven rotating member can be reversed by 180° around the toothed pulley shaft on the upstream side in a belt advancing direction.

17. The curved belt conveyor according to any one of claim 1 or claim 9 **characterized in that** the rotating members are constituted by endless rotating belts arranged at inner positions in a diametrical direction from the outer peripheral edges of the endless curved belt, and resilient members fixed to the outer surfaces of the rotating belts spaced apart by a predetermined gap, the curved belt is held under press contact of the resilient members of the corresponding rotating members while holding the curved belt and transferred.

18. The curved belt conveyor as set forth claim 13 **characterized in that** the pair of rotating members are arranged in a plurality of rows by crossing at a right angle with respect to a centerline extending from the turning center of the endless curved belt in a diametrical direction.
